# EUROPEAN PATENT SPECIFICATION

(11) **EP 3 173 599 B1**
(45) Date of publication and mention of the grant of the patent: **02.10.2019**
(21) Application number: 14906614.4
(22) Date of filing: 21.11.2014
(51) Int. Cl.: F02B 37/22, F01D 9/02, F01D 17/16, F02C 6/12, F01D 9/04, F01D 25/00, F02B 37/24

(54) **VARIABLE NOZZLE MECHANISM AND VARIABLE DISPLACEMENT TURBOCHARGER**
MECHANISMUS FÜR VARIABLE DÜSE UND TURBOLADER MIT VARIABLER VERDRÄNGUNG
MÉCANISME À BUSE VARIABLE ET TURBOCOMPRESSEUR À DÉPLACEMENT VARIABLE

(43) Date of publication of application: 31.05.2017
(73) Proprietor: Mitsubishi Heavy Industries Engine & Turbocharger, Ltd., Sagamihara-shi, Kanagawa 252-5293 (JP)
(72) Inventor: KATOU, Eigo, Tokyo 108-8215 (JP); SAKAMOTO, Keigo, Tokyo 108-8215 (JP); HAYASHI, Noriyuki, Tokyo 108-8215 (JP); ARIMIZU, Hiroyuki, Tokyo 108-8215 (JP); SEIKE, Nariaki, Tokyo 108-8215 (JP)
(74) Representative: Mader, Joachim
(86) International application number: PCT/JP2014/080944
(87) International publication number: WO 2016/079872

(56) References cited:
- EP-A1- 2 143 910
- EP-A2- 0 238 038
- WO-A1-2011/074039
- JP-A- 2007 187 015
- JP-A- 2007 187 015
- JP-A- 2012 062 808
- JP-B2- 5 010 631

## Description

### TECHNICAL FIELD

The present disclosure relates to a variable nozzle mechanism and a variable capacity turbocharger. Specifically it relates to three alternative designs of a variable nozzle mechanism for a variable capacity turbocharger.

### BACKGROUND

A variable nozzle mechanism for a variable capacity turbocharger adjusts an area of an exhaust gas path in a turbine housing to change a flowrate and pressure of exhaust gas flowing to a turbine blade, and thus achieves a higher turbocharging effect.

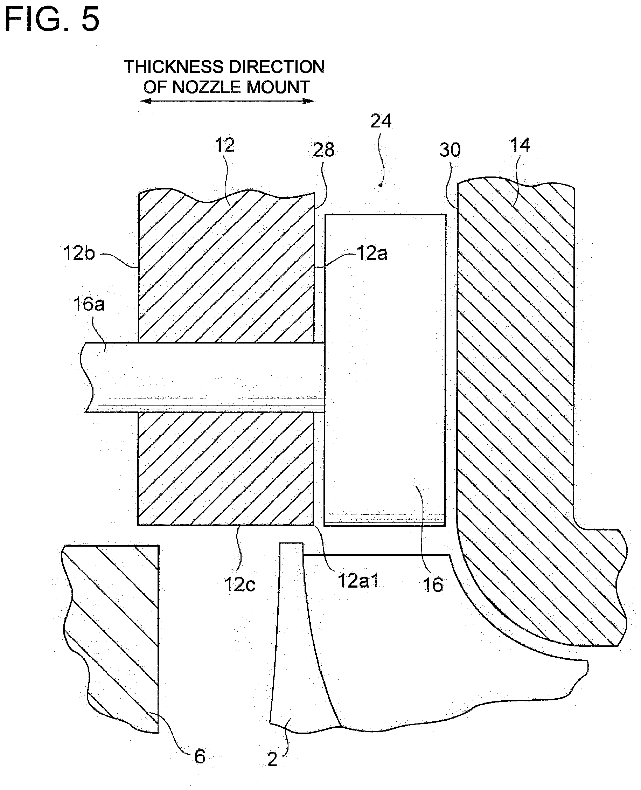

As illustrated in FIG. 5, the variable nozzle mechanism generally includes: a pair of annular plates 12 and 14 facing each other and defining an exhaust gas path 24 in between; and a plurality of nozzle vanes 16 rotatably supported between the pair of annular plates 12 and 14. The variable nozzle mechanism adjusts a path area of the exhaust gas path 24 by changing an angle of the plurality of nozzle vanes 16.

For example, Japanese Patent No. 5010631, filed by the present inventors, discloses an example of a turbocharger including the variable nozzle mechanism.

### Citation List

### Patent Literature

Patent Document 1: Japanese Patent No. 5010631

### SUMMARY

### Technical Problem

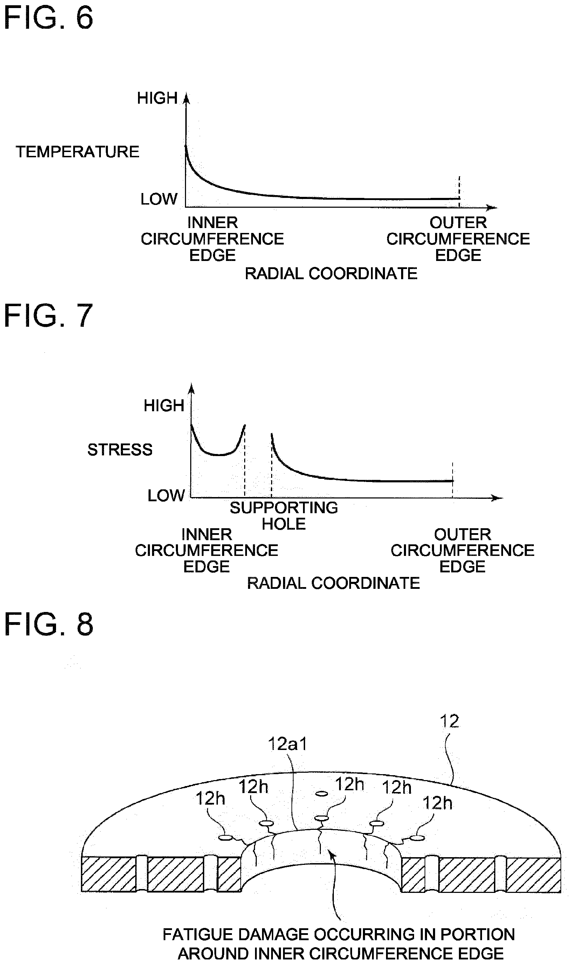

The present inventors have come up with the following findings. The annular plates 12 and 14 in the variable nozzle mechanism illustrated in FIG. 5 is exposed to high temperature exhaust gas when an engine is operating. Thus, when the temperature and the flowrate of the exhaust gas changes due to start/stop of the engine or the other like load change, a radial temperature distribution on the annular plates 12 and 14 is likely to be largely uneven. For example, in a portion around an inner circumference edge 12a1 of the annular plate 12 on a side of the exhaust gas path 24, two surfaces, including a surface 12a of the annular plate 12 on the side of the exhaust gas path 24 and an inner circumference surface 12c of the annular plate 12, are exposed to the exhaust gas. Thus, when the engine starts, the temperature in the area rises quicker than other portions of the annular plate 12, and thus radial temperature distribution on the annular plate 12 is likely to be uneven as illustrated in FIG. 6 (temperature is likely to be higher at a portion further on a radially inner side).

The present inventors have further found that when thermal stress (see FIG. 7) due to such an uneven temperature distribution is repeatedly applied, fatigue damage is likely to occur in a portion of the annular plate 12, 14 around the inner circumference edge on the side of the exhaust gas path 24. In an area between the inner circumference edge 12a1 and a supporting hole 12h on the annular plate 12 provided with the supporting hole 12h for rotatably supporting the nozzle vane 16, stress is likely to be large as illustrated in FIG. 7 and the fatigue damage is likely to occur (see FIG. 8).

Patent Document 1 discloses no configuration for preventing the fatigue damage from occurring in the portion around the inner circumference edge of the annular plate on a side of the exhaust gas path, and does not even mention about the problem in that the fatigue damage occurs in the portion around the inner circumference edge.

Document JP 2007 1 87015 A relates to a variable capacity type turbocharger provided with a bearing housing storing a turbine shaft, a turbine housing combined with the bearing housing and storing a turbine wheel therein, vanes operable to change channel area of an exhaust gas introducing path in the turbine housing and a vane operation mechanism for operating the vanes.

Reference JP 2012 0 62 80 8 A discloses a nozzle plate of a variable nozzle mechanism arranged in a communication path for communicating a scroll passage of a turbine housing with an annular space.

Reference EP 2 143 910 A1 relates to an exhaust gas turbocharger for a motor vehicle comprising a turbine housing, a compressor housing and a bearing housing arranged in between, and a shaft carrying a turbine wheel and a compressor wheel, which is mounted in the bearing housing via a bearing arrangement.

Reference EP 0 23 803 8 A2 relates to a gas turbine driven by exhaust gas from an internal combustion engine, having a plurality of guide vanes formed at a constant circumferential pitch at a nozzle portion through which the exhaust gas is directed from a chamber in a scroll casing into a space where an impeller is rotatably mounted.

The present invention is made in view of the problem described above, and an object of the present invention is to provide a variable nozzle mechanism that can prevent, for an annular plate forming an exhaust gas path in a variable nozzle mechanism, fatigue damage from occurring in a portion of the annular plate around an inner circumference edge on a side of the exhaust gas path.

### Solution to Problem

The invention is defined by the subject-matter of each of the appended independent claims 1, 3, and 10, providing alternative solutions to the problem described.
(1) A variable nozzle mechanism for a variable capacity turbocharger according to all embodiments of the present invention inter alia includes: a first plate having an annular shape; a second plate facing the first plate and having an annular shape, the second plate and the first plate defining an exhaust gas path in between; a plurality of nozzle vanes rotatably supported between the first plate and the second plate; and an annular member inserted on an inner circumference side of the first plate. The first plate includes a front surface (surface on a front side) facing the exhaust gas path and a back surface on an opposite side to the front surface, the annular member includes a front surface facing the exhaust gas path and a back surface on an opposite side to the front surface, and a gap is provided between the first plate and the annular member, the gap extending along a thickness direction of the first plate, from a point between an inner circumference edge of the front surface of the first plate and an outer circumference edge of the front surface of the annular member.
   In this specification, one of a "nozzle mount" and a "nozzle plate", described in "DETAILED DESCRIPTION", corresponds to the term "first plate" and the other one corresponds to the term "second plate", unless noted otherwise. Thus, the variable nozzle mechanism with the configuration (1) described above, includes a mode in which the "first plate" corresponds to the "nozzle mount" and the "second plate" corresponds to the "nozzle plate", and a mode in which the "first plate" corresponds to the "nozzle plate" and the "second plate" corresponds to the "nozzle mount". In the description below, the terms "first plate" and "second plate" are used to indicate that the two modes described above are included, unless otherwise specified. The term "front surface" represents "a surface on the front side" and not "any surface", unless otherwise specified.
   In the variable nozzle mechanism with the configuration (1), the radial temperature distribution might be largely uneven on the first plate and the annular member due to the change in the temperature and flowrate of the exhaust gas caused by start/stop of an engine or other like load changes. Even in such a case, the first plate and the annular member thermally expand without interfering each other on the side of the front surface of the members as long as the gap is not filled. Thus, thermal stress can be effectively reduced. Thus, the fatigue damage can be prevented from occurring in the portion around the inner circumference edge of the first plate on the side of the front surface.
   Any embodiment forming part of the invention furthermore also includes all remaining features of at least one of the independent claims 1, 3, 10. Any embodiment which does not include all features of at least one of the independent claims does not form part of the invention but is merely helpful to understand the invention.
(2) In some embodiments, in the variable nozzle mechanism with the configuration (1) described above, the annular member includes a press fitting portion which is press fit to the first plate, at a portion further toward a side of the back surface of the annular member than the gap.
   In the variable nozzle mechanism with the configuration (2) described above, the annular member can be prevented from falling off from the first plate with a simple configuration while ensuring the gap provided between the first plate and the annular member.
(3) In some embodiments, in the variable nozzle mechanism with the configuration (2) described above, the first plate has an inner circumference surface provided with a step portion against which the annular member abuts in the thickness direction of the first plate, and the press fitting portion is press fit to the first plate at a portion further toward the side of the back surface of the annular member than the step portion.
   In the variable nozzle mechanism with the configuration (3) described above, the annular member can be more effectively prevented from falling off from the first plate with a simple configuration.
(4) In some embodiments, the variable nozzle mechanism with the configuration (1) described above, the first plate has an inner circumference surface provided with a step portion against which the annular member abuts in the thickness direction of the first plate, and the variable nozzle mechanism further includes a pressing member which presses the annular member toward the step portion.
   In the variable nozzle mechanism with the configuration (4), the annular member can be prevented from falling off from the first plate, while ensuring the gap provided between the first plate and the annular member.
(5) In some embodiments, in the variable nozzle mechanism with the configuration (4) described above, a second gap is provided between the first plate and the annular member, the second gap extending along the thickness direction of the first plate, to the step portion from a point between the inner circumference edge of the back surface of the first plate and the outer circumference edge of the back surface of the annular member.
   In the variable nozzle mechanism with the configuration (5) described above, the first plate and the annular member are press fit to each other with a gap provided entirely over the thickness direction of the first plate. Thus, the thermal stress can be more effectively reduced in the portion around the inner circumference surface of the first plate, whereby the fatigue damage can be effectively prevented from occurring in the portion around the inner circumference surface of the first plate.
(6) In some embodiments, in the variable nozzle mechanism with the configurations (3) to (5) described above, the step portion is formed entirely over the inner circumference surface of the first plate.
   In the variable nozzle mechanism with the configuration (6) described above, the step portion is formed entirely over the inner circumference surface of the first plate. Thus, more uniform thermal stress can be achieved in a portion around the step portion compared with a configuration in which the step portion is formed only partially on the inner circumference surface of the first plate. Thus, the fatigue damage can be prevented from occurring in the portion around the step portion of the first plate.
(7) In some embodiments, in the variable nozzle mechanism with the configurations (1) to (6) described above, the first plate and the annular member are made of stainless steel.
   In the variable nozzle mechanism with the configurations (1) to (6) described above, the fatigue damage can be prevented from occurring in the portion around the inner circumference edge of the first plate. Thus, even when the first plate and the annular member are made of stainless steel featuring a lower marital strength and a lower cost than a nickel-based alloy, as in the configuration (7) described above, the fatigue damage can be prevented from occurring in the portion around the inner circumference edge of the first plate on the side of the front surface. Thus, a manufacturing cost of the variable nozzle mechanism can be prevented from increasing, while preventing the fatigue damage from occurring in the portion around the inner circumference edge of the first plate on the side of the front surface.
(8) In some embodiments, in the variable nozzle mechanism with the configurations (1) to (7) described above, the first plate is a nozzle mount defining a hub side wall of the exhaust gas path, the second plate is a nozzle plate defining a shroud side wall of the exhaust gas path, and the first plate is provided with a plurality of supporting holes each rotatably supporting a shaft portion of a corresponding one of the plurality of nozzle vanes.
   The nozzle mount defining the hub side wall of the exhaust gas path is provided with the supporting hole rotatably supporting the nozzle vane. Thus, as illustrated in FIG. 7, the stress is likely to be large and the fatigue damage is likely to occur in a portion of the nozzle mount between the inner circumference edge and the supporting hole. In view of this, the variable nozzle mechanism with the configuration (8) described above has the gap provided so that the fatigue damage can be effectively prevented from occurring even in the nozzle mount in which the fatigue damage is likely to occur as described above.
(9) In some embodiments, in the variable nozzle mechanism with the configuration (8) described above, a material forming the annular member has a smaller linear expansion coefficient than a material forming the first plate.
   In the variable nozzle mechanism with the configuration (9) described above, even when the temperature of the annular member temporarily exceeds that of the nozzle mount due the operation of the engine, the thermal stress can be prevented from increasing with the difference between the annular member and the nozzle mount in a thermal deformation amount prevented from increasing. Thus, the fatigue damage can be prevented from occurring in the portion around the inner circumference edge of the nozzle mount.
(10) In some embodiments, in the variable nozzle mechanism with the configuration (9) described above, the annular member is formed of a nickel-based alloy and the first plate is formed of stainless steel.
   In the variable nozzle mechanism with the configuration (10) described above, the annular member, which is relatively likely to involve high thermal stress, is made of the nickel-based alloy featuring high material strength and a high cost. The nozzle mount, which is relatively less likely to involve high thermal stress, is made of stainless steel. Thus, a manufacturing cost of the variable nozzle mechanism can be prevented from increasing, while preventing the fatigue damage from occurring in the portion around the inner circumference edge of the nozzle mount.
(11) A variable nozzle mechanism for a variable capacity turbocharger according to at least one embodiment of the present invention includes: a first plate having an annular shape; a second plate facing the first plate and having an annular shape, the second plate and the first plate defining an exhaust gas path in between; a plurality of nozzle vanes rotatably supported between the first plate and the second plate; and an annular member, in agreement with the details given in appended independent claim 10, inserted on an inner circumference side of the first plate, wherein the first plate is a nozzle mount defining a hub side wall of the exhaust gas path, the second plate is a nozzle plate defining a shroud side wall of the exhaust gas path, the first plate is provided with a plurality of supporting holes each rotatably supporting a shaft portion of a corresponding one of the plurality of nozzle vanes, and a material forming the annular member has a smaller linear expansion coefficient than a material forming the first plate.
   In the variable nozzle mechanism with the configuration (11) described above, the material forming the annular member has the smaller linear expansion coefficient than the material forming the nozzle mount. Thus, even when the temperature of the annular member temporarily exceeds that of the nozzle mount due the operation of the engine, the thermal stress can be prevented from increasing with the difference between the annular member and the nozzle mount in a thermal deformation amount prevented from increasing. Thus, the fatigue damage can be prevented from occurring in the portion around the inner circumference edge of the nozzle mount.
(12) A variable capacity turbocharger according to at least one embodiment of the present invention includes: a turbine rotor; a turbine housing which accommodates the turbine rotor, and defines a scroll flow path into which exhaust gas from an engine flows; and the variable nozzle mechanism according to any one of claims 1 to 11, wherein the exhaust gas which has passed through the scroll flow path is supplied to the turbine rotor via the variable nozzle mechanism.

In the variable capacity turbocharger with the configuration (12) described above, the fatigue damage is prevented from occurring in the portion around the inner circumference edge of the first plate on the side of the front surface. Thus, work and time required for a maintenance, such as repairing and replacing of the first plate, can be reduced.

### Advantageous Effects

At least one of embodiments of the present invention provides a variable nozzle mechanism that can prevent, for an annular plate defining an exhaust gas path in a variable nozzle mechanism, fatigue damage from occurring in a portion of the annular plate around an inner circumference edge on a side of the exhaust gas path.

### BRIEF DESCRIPTION OF DRAWINGS

FIG. 1 is a partial cross-sectional view of a variable capacity turbocharger according to one embodiment of the present invention, taken along a rotational axis.
FIG. 2 is a partially enlarged view schematically illustrating a configuration example of the variable nozzle mechanism illustrated in FIG. 1.
FIG. 3 is a partially enlarged view schematically illustrating a configuration example of the variable nozzle mechanism illustrated in FIG. 1.
FIG. 4 is a partially enlarged view schematically illustrating a configuration example of the variable nozzle mechanism illustrated in FIG. 1.
FIG. 5 is a partially enlarged view schematically illustrating a configuration example of a conventional variable nozzle mechanism.
FIG. 6 is a diagram illustrating an example of a relationship between a radial coordinate of an annular plate and temperature.
FIG. 7 is a diagram illustrating an example of a relationship between the radial coordinate of the annular plate and stress.
FIG. 8 is a diagram illustrating a state where fatigue damage is generated at a portion of the annular plate around an inner circumference edge on a side of an exhaust path.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

For example, the expressions used herein that mean relative or absolute arrangement, such as "in a direction", "along a direction", in parallel with", "orthogonal with", "center", and "concentrically", mean not only exactly what they refer to but also such states that are relatively displaced with a tolerance or by an angle that is small enough to achieve the same level of functionality.

The expressions used herein that mean things are equivalent to each other, such as "the same", "equivalent", and "uniform", mean not only exactly equivalent states but also such states that have a tolerance or a difference that is small enough to achieve the same level of functionality.

For example, expressions that represent shapes, such as quadrangles and cylinders, mean not only what they refer to in a geometrically strict sense but also shapes having some irregularities, chamfered portions, or the like that can provide the same level of functionality.

The expressions "including", "comprising", and "provided with" one component are not exclusive expressions that exclude other components.

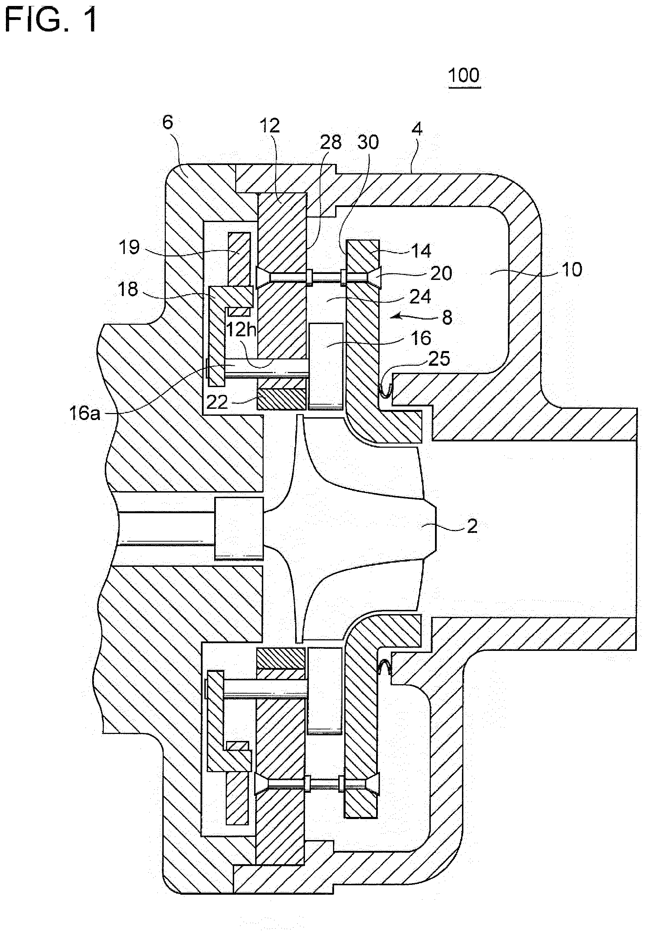

FIG. 1 is a partial cross-sectional view of a variable capacity turbocharger 100 according to one embodiment of the present invention, taken along a rotational axis.

The variable capacity turbocharger 100 includes: a turbine rotor 2 coaxially provided with an unillustrated compressor; a turbine casing 4 that accommodates the turbine rotor 2; a bearing housing 6 that rotatably supports the turbine rotor 2; and a variable nozzle mechanism 8 disposed between the turbine casing 4 and the bearing housing 6.

A scroll flow path 10 is formed in the turbine casing 4. Exhaust gas from an unillustrated engine passes through the scroll flow path 10, and then is supplied to the turbine rotor 2 through the variable nozzle mechanism 8.

The variable nozzle mechanism 8 includes a nozzle mount 12, a nozzle plate 14, a plurality of nozzle vanes 16, a plurality of lever plates 18, a drive ring 19, a plurality of nozzle supports 20, and an annular member 22.

The nozzle mount 12 is an annular plate disposed on an outer circumference side of the turbine rotor 2, and is configured to rotatably support the plurality of nozzle vanes 16. The nozzle mount 12 is provided with a plurality of supporting holes 12h (through holes) each provided for supporting a shaft portion 16a of the corresponding one of the plurality of nozzle vanes 16.

The nozzle plate 14 is an annular plate disposed while facing the nozzle mount 12, and is configured in such a manner that an exhaust gas path 24 is defined between the nozzle mount 12 and the nozzle plate 14. A spring seal 25 is provided on a side of the nozzle plate 14 opposite to the nozzle mount 12, and between the nozzle plate 14 and a turbine housing.

The nozzle mount 12 defines a hub side wall 28 of the exhaust gas path 24. The nozzle plate 14 defines a shroud side wall 30 of the exhaust gas path 24. The nozzle mount 12 and the nozzle plate 14 are coupled to each other via a nozzle support 20.

The plurality of nozzle vanes 16 are disposed between the nozzle mount 12 and the nozzle plate 14, and are rotatably supported by the nozzle mount 12. The variable nozzle mechanism 8 is configured to adjust a path area of the exhaust gas path 24 by changing an angle of the plurality of nozzle vanes 16.

In this variable nozzle mechanism 8, the drive ring 19 is drivingly rotated by driving force transmitted from an unillustrated actuator. When the drive ring 19 rotates, the lever plate 18, engaged with the drive ring 19, rotates the shaft portions 16a of the nozzle vanes 16. Thus, the nozzle vanes 16 rotate to have their angle changed.

The annular member 22 is inserted on an inner circumference side of the nozzle mount 12, with a small gap provided between an outer circumference end of the turbine rotor 2 and the annular member 22. The annular member 22 defines the hub side wall 28 of the exhaust gas path 24, together with the nozzle mount 12. The annular member 22 comprises all details specified in one of the appended independent claims 1, 3, or 10 and further explained below.

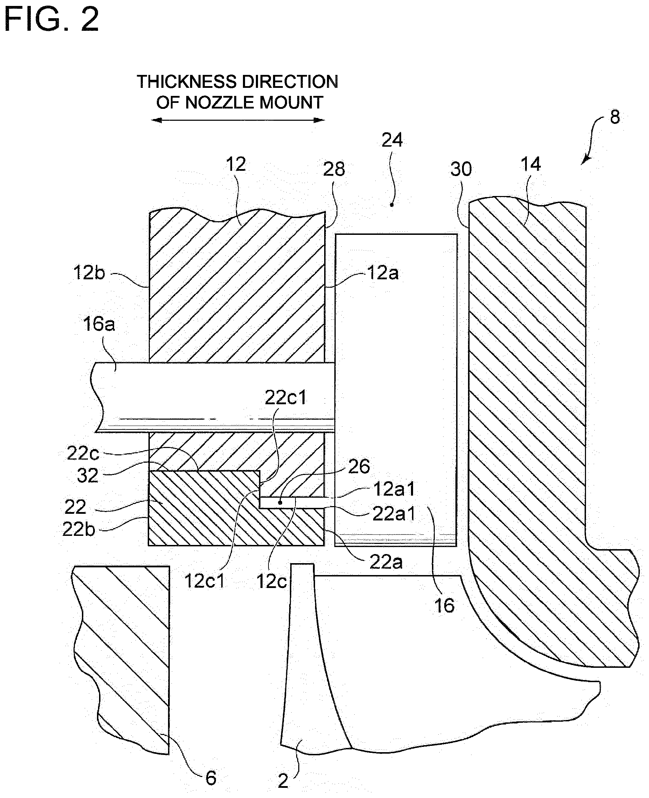

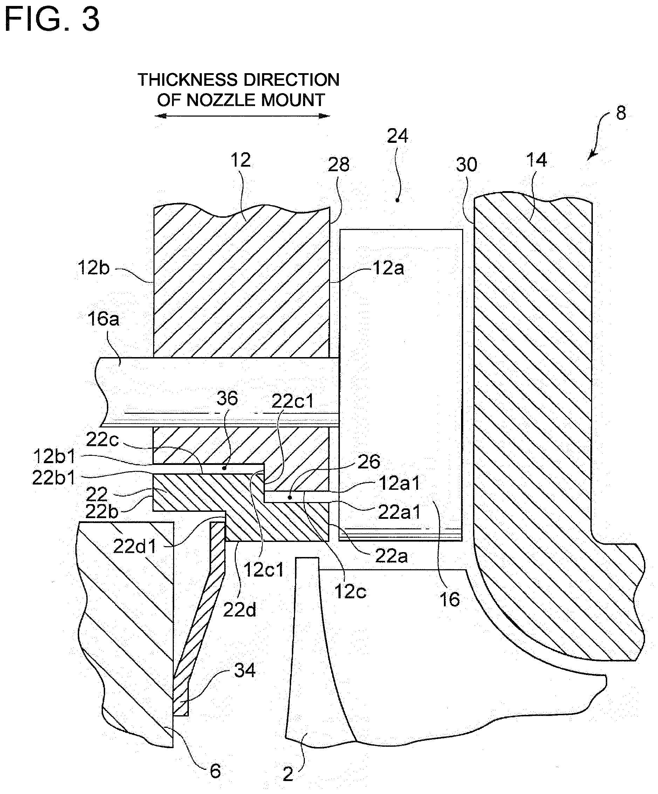

FIG. 2 is a partially enlarged view illustrating an example of a configuration of the variable nozzle mechanism illustrated in FIG. 1. FIG. 3 is a partially enlarged view illustrating an example of another configuration of the variable nozzle mechanism illustrated in FIG. 1.

In some embodiments, as illustrated in FIGS. 2 and 3, the nozzle mount 12 includes: a front surface 12a as a surface facing the exhaust gas path 24 (surface facing the nozzle plate 14) (in this specification, the term "front surface" represents "a surface on a front side", and not "any surface" unless otherwise specified); and a back surface 12b as a surface on an opposite side to the front surface 12a. The annular member 22 includes a front surface 22a as a surface facing the exhaust gas path 24 (surface facing the nozzle plate 14); and a back surface 22b as a surface on an opposite side to the front surface 22a. In this configuration, a gap 26 is provided between the nozzle mount 12 and the annular member 22. The gap extends, along a thickness direction of the nozzle mount 12, from a point between an inner circumference edge 12a1 of the front surface 12a of the nozzle mount 12 and an outer circumference edge 22a1 of the front surface 22a of the annular member 22.

In the variable nozzle mechanism 8 illustrated in FIGS. 2 and 3, the radial temperature distribution might be largely uneven on the hub side wall (the nozzle mount 12 and the annular member 22) 28 of the exhaust gas path 24 due to the change in the temperature and flowrate of the exhaust gas caused by start/stop of an unillustrated engine or the other like load change. Even in such a case, the nozzle mount 12 and the annular member 22 thermally expand without interfering each other as long as the gap 26 is not filled. Thus, thermal stress can be effectively reduced. Thus, the fatigue damage can be prevented from occurring in the portion around the inner circumference edge 12a1 of the nozzle mount 12 on the side of the front surface 12a, even when the nozzle mount 12 and the annular member 22 are made of stainless steel featuring a lower marital strength and a lower cost than a nickel-based alloy (for example, Inconel (registered trademark)). Thus, a manufacturing cost of the variable nozzle mechanism 8 can be prevented from increasing, while preventing the fatigue damage from occurring in the portion around the inner circumference edge 12a1 of the nozzle mount 12 on the side of the front surface 12a.

In some cases the cost may not be an issue. In such a case, the nozzle mount 12 and the annular member 22 may both be made of a nickel-based alloy. Furthermore, the annular member 22 that is relatively likely to involve high thermal stress may be formed of a nickel-based alloy, and the nozzle mount 12 that is relatively less likely to involve high thermal stress may be formed of stainless steel.

In some embodiments, as illustrated in FIGS. 2 and 3 for example, a step portion 12c1 is formed entirely over the inner circumference surface 12c of the nozzle mount 12. The nozzle mount 12 has a smaller inner diameter in a portion further on a side of the front surface 12a than the step portion 12c1, than in a portion further on a side of the back surface 12b than the step portion 12c1. A step portion 22c1 is formed entirely over the outer circumference surface 22c of the annular member 22. The annular member 22 has a smaller outer diameter in a portion further on a side of the front surface 22a than the step portion 22c1, than in a portion further on a side of the back surface 22b than the step portion 22c1. The step portion 22c1 of the annular member 22 abuts against the step portion 12c1 of the nozzle mount 12 in the thickness direction of the nozzle mount 12. Thus, the annular member 22 is positioned in the thickness direction of the nozzle mount 12, and thus is prevented from falling off toward the exhaust gas path 24.

In one embodiment, as illustrated in FIG. 2 for example, the annular member 22 includes a press fitting portion 32 press fit to the nozzle mount 12, at a portion further toward the back surface 22b of the annular member 22 than the gap 26. Thus, the annular member 22 can be prevented from falling off from the nozzle mount 12 with a simple configuration, while ensuring the gap 26 provided between the nozzle mount 12 and the annular member 22.

In one embodiment, as illustrated in FIG. 2 for example, the press fitting portion 32 is press fit to the nozzle mount 12 at a portion further toward the back surface side 22b of the annular member 22 than the step potion 12c1. This ensures that the annular member 22 is prevented from falling off from the nozzle mount 12 with a simple configuration.

In one embodiment, as illustrated in FIG. 3 for example, the variable nozzle mechanism 8 includes a pressing member 34 which presses the annular member 22 toward the step portion 12c1. Thus, the annular member 22 can be prevented from falling off from the nozzle mount 12, while ensuring the gap 26 provided between the nozzle mount 12 and the annular member 22.

In one embodiment, as illustrated in FIG. 3 for example, a second gap 36 is provided between the nozzle mount 12 and the annular member 22. The second gap 36 extends to the step portion 12c1, along the thickness direction of the nozzle mount 12, from a point between the inner circumference edge 12b1 of the back surface 12b of the nozzle mount 12 and the outer circumference edge 22b1 of the back surface 22b of the annular member 22. Thus, the nozzle mount 12 and the annular member 22 are press fit to each other with the gap provided entirely over the thickness direction of the nozzle mount 12. Thus, the thermal stress can be more effectively reduced compared with the embodiment illustrated in FIG. 3, whereby the fatigue damage can be effectively prevented from occurring at an around the inner circumference surface 12 of the nozzle mount 12.

In one embodiment, as illustrated in FIG. 3 for example, the inner circumference surface 22d of the annular member 22 is provided with a step portion 22d1. The annular member 22 has a larger diameter in a portion further on a side of the front surface 22a than the step portion 22d1, than in a portion further on a side of the back surface 22b than the step portion 22d1. The pressing member 34 is configured to press the annular member 22 while having one end side supported by the bearing housing 6 and the other end side in contact with the step portion 22d1. Thus, the annular member 22 can be stably supported on the inner circumference side of the nozzle mount 12. For example, the pressing member 34 may be a spring plate having an annular shape.

In some embodiments, in the variable nozzle mechanism 8 illustrated in FIGS. 2 to 4 for example, a material forming the annular member 22 may have a smaller linear expansion coefficient than a material forming the nozzle mount 12. For example, this condition on the difference in the linear expansion coefficient holds true when the nozzle mount 12 is formed of stainless steel and the annular member 22 is formed of a nickel-based alloy.

Thus, even when the temperature of the annular member 22 temporarily exceeds the nozzle mount 12 due the operation of the unillustrated engine, the thermal stress can be prevented from increasing with the difference between the annular member 22 and the nozzle mount 12 in a thermal deformation amount prevented from increasing. Thus, the fatigue damage can be prevented from occurring in a portion around the inner circumference edge 12a1 of the nozzle mount 12.

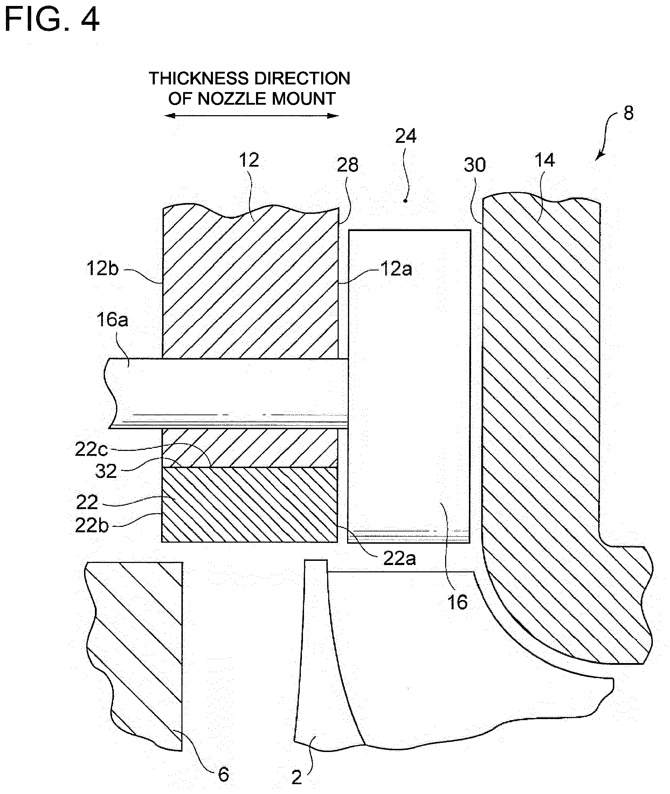

The variable nozzle mechanism 8 illustrated in FIG. 4 is not provided with the gap 26 illustrated in FIGS. 2 and 3. Even in such a configuration, the fatigue damage can be prevented from occurring in the portion around the inner circumference edge 12a1 of the nozzle mount 12, when the material forming the annular member 22 has a smaller linear expansion coefficient than the material forming the nozzle mount 12. Still, the fatigue damage might not be sufficiently prevented from occurring only by setting the liner expansion coefficient of the annular member 22 to be smaller than that of the nozzle mount 12, when a temperature difference between the nozzle mount 12 and the annular member 22 due to the operation of the unillustrated engine is large.

In view of this, in the variable nozzle mechanism 8 illustrated FIGS. 2 and 3, the fatigue damage can be easily prevented from occurring by appropriately setting the length of the gap 26 in the thickness direction of the nozzle mount 12 and the radial direction. For example, the length of the gap 26 in the thickness direction of the nozzle mount 12 (depth) is in a range of 1/10 to less than 1, and may preferably be in a range of 1/2 to less than 3/4, of the thickness of the nozzle mount 12 (or the length of the annular member 22 in the thickness direction of the nozzle mount). For example, the length of the gap 26 in the radial direction of the nozzle mount 12 may be equal to or longer than 10 µm and may preferably be equal to or longer than 50 µm.

The present invention is not limited to the embodiment described above, and includes a mode obtained by modifying the embodiment described above and a mode obtained by appropriately combining the modes. All embodiments falling within the scope of the present invention comprise at least all features of one of the appended independent claims.

For example, not only the nozzle mount 12 but also the nozzle plate 14 is exposed to the high temperature exhaust gas while the unillustrated engine is operating. Thus, when the temperature and the flowrate of the exhaust gas change due to star/stop of the engine or the other like load change, the radial temperature distribution of the nozzle plate 14 becomes largely uneven. Thus, the annular member 22 may be inserted on the inner circumference side of the nozzle plate 14 as in the case of the nozzle mount 12, whereby the fatigue damage can be prevented from occurring in a portion around the inner circumference edge of the nozzle plate 14.

### Reference Signs List

- 2: Turbine rotor
- 4: Turbine casing
- 6: Bearing housing
- 8: Variable nozzle mechanism
- 10: Scroll flow path
- 12: Nozzle mount (annular plate)
- 12a: Front surface
- 12a1: Inner circumference edge
- 12b: Back surface
- 12b1: Inner circumference edge
- 12c: Inner circumference surface
- 12c1: Step portion
- 12h: Supporting hole
- 14: Nozzle plate (annular plate)
- 16: Nozzle vane
- 16a: Shaft portion
- 18: Lever plate
- 19: Drive ring
- 20: Nozzle support
- 22: Annular member
- 22a: Front surface
- 22a1: Outer circumference edge
- 22b: Back surface
- 22b1: Outer circumference edge
- 22c: Outer circumference surface
- 22c1: Step portion
- 22d: Inner circumference surface
- 22d1: Step portion
- 24: Exhaust gas path
- 25: Spring seal
- 26: Gap
- 28: Hub side wall
- 30: Shroud side wall
- 32: Press fitting portion
- 34: Pressing member
- 36: Second gap
- 100: Variable capacity turbocharger

## Claims

1. A variable nozzle mechanism (8) for a variable capacity turbocharger (100), the variable nozzle mechanism (8) comprising:
a first plate (12) having an annular shape;
a second plate (14) facing the first plate (12) and having an annular shape, the second plate (14) and the first plate (12) defining an exhaust gas path (24) in between;
a plurality of nozzle vanes (16) rotatably supported between the first plate (12) and the second plate (14); and
an annular member (22) inserted on an inner circumference side of the first plate (12), wherein
the first plate (12) includes a front surface (12a) facing the exhaust gas path (24) and a back surface (12b) on an opposite side to the front surface (12a),
the annular member (22) includes a front surface (22a) facing the exhaust gas path (24) and a back surface (22b) on an opposite side to the front surface (22a),
a gap (26) is provided between the first plate (12) and the annular member (22), the gap (26) extending along a thickness direction of the first plate (12), from a point between an inner circumference edge of the front surface (12a) of the first plate (12) and an outer circumference edge of the front surface (22a) of the annular member (22), and
the annular member (22) includes a press fitting portion (32) which is press fit to the first plate (12), at a portion further toward a side of the back surface (22b) of the annular member (22) than the gap (26).

2. The variable nozzle mechanism (8) according to claim 1, wherein
the first plate (12) has an inner circumference surface provided with a step portion against which the annular member (22) abuts in the thickness direction of the first plate (12), and
the press fitting portion (32) is press fit to the first plate (12) at a portion further toward the side of the back surface (22b) of the annular member (22) than the step portion.

3. A variable nozzle mechanism (8) for a variable capacity turbocharger (100), the variable nozzle mechanism (8) comprising:
a first plate (12) having an annular shape;
a second plate (14) facing the first plate (12) and having an annular shape, the second plate (14) and the first plate (12) defining an exhaust gas path (24) in between;
a plurality of nozzle vanes (16) rotatably supported between the first plate (12) and the second plate (14); and
an annular member (22) inserted on an inner circumference side of the first plate (12), wherein
the first plate (12) includes a front surface (12a) facing the exhaust gas path (24) and a back surface (12b) on an opposite side to the front surface (12a),
the annular member (22) includes a front surface (22a) facing the exhaust gas path (24) and a back surface (22b) on an opposite side to the front surface (22a),
a gap (26) is provided between the first plate (12) and the annular member (22), the gap (26) extending along a thickness direction of the first plate (12), between an inner circumference edge of the front surface (12a) of the first plate (12) and an outer circumference edge of the front surface (22a) of the annular member (22),
the first plate (12) has an inner circumference surface (12c) provided with a step portion (12c1) against which the annular member (22) abuts in the thickness direction of the first plate (12), and
the variable nozzle mechanism (8) further includes a pressing member (34) which presses the annular member (22) toward the step portion (12c1).

4. The variable nozzle mechanism (8) according to claim 3, wherein a second gap (36) is provided between the first plate (12) and the annular member (22), the second gap (36) extending along the thickness direction of the first plate (12), to the step portion (12c1) from a point between the inner circumference edge of the back surface (12b) of the first plate (12) and the outer circumference edge of the back surface (22b) of the annular member (22).

5. The variable nozzle mechanism (8) according to any one of claims 2 to 4, wherein the step portion (12c1) is formed entirely over the inner circumference surface (12c) of the first plate (12).

6. The variable nozzle mechanism (8) according to any one of claims 1 to 5, wherein the first plate (12) and the annular member (22) are made of stainless steel.

7. The variable nozzle mechanism (8) according to any one of claims 1 to 6, wherein
the first plate (12) is a nozzle mount defining a hub side wall of the exhaust gas path (24),
the second plate (14) is a nozzle plate defining a shroud side wall of the exhaust gas path (24), and
the first plate (12) is provided with a plurality of supporting holes (12h) each rotatably supporting a shaft portion (16a) of a corresponding one of the plurality of nozzle vanes (16).

8. The variable nozzle mechanism (8) according to claim 7, wherein a material forming the annular member (22) has a smaller linear expansion coefficient than a material forming the first plate (12).

9. The variable nozzle mechanism (8) according to claim 8, wherein the annular member (22) is made of a nickel-based alloy and the first plate (12) is made of stainless steel.

10. A variable nozzle mechanism (8) for a variable capacity turbocharger (100), the variable nozzle mechanism (8) comprising:
a first plate (12) having an annular shape;
a second plate (14) facing the first plate (12) and having an annular shape, the second plate (14) and the first plate (12) defining an exhaust gas path (24) in between;
a plurality of nozzle vanes (16) rotatably supported between the first plate (12) and the second plate (14); and
an annular member (22) inserted on an inner circumference side of the first plate (12), wherein
the first plate (12) is a nozzle mount defining a hub side wall of the exhaust gas path (24),
the second plate (14) is a nozzle plate defining a shroud side wall of the exhaust gas path (24),
the annular member (22) includes a front surface (22a) facing the exhaust gas path (24), a back surface (22b) on an opposite side to the front surface (22a), and an outer circumferential surface (22c) being not provided with a gap between the first plate (12),
the first plate (12) is provided with a plurality of supporting holes (12h) each rotatably supporting a shaft portion (16a) of a corresponding one of the plurality of nozzle vanes (16), and
a material forming the annular member (22) has a smaller linear expansion coefficient than a material forming the first plate (12).

11. A variable capacity turbocharger (100) comprising:
a turbine rotor (2);
a turbine housing (4) which accommodates the turbine rotor (2), and defines a scroll flow path (10) into which exhaust gas from an engine flows; and
the variable nozzle mechanism (8) according to any one of claims 1 to 10, wherein
the exhaust gas which has passed through the scroll flow path (10) is supplied to the turbine rotor (2) via the variable nozzle mechanism (8).

## Patentansprüche

1. Variabler Düsenmechanismus (8) für einen Turbolader (100) mit variabler Kapazität, wobei der variable Düsenmechanismus (8) umfasst:
eine erste Platte (12) mit einer ringförmigen Form;
eine zweite Platte (14), die der ersten Platte (12) zugewandt ist und eine ringförmige Form aufweist, wobei die zweite Platte (14) und die erste Platte (12) einen Abgasweg (24) dazwischen definieren;
eine Vielzahl von Düsenschaufeln (16), die drehbar zwischen der ersten Platte (12) und der zweiten Platte (14) gelagert sind; und
ein ringförmiges Element (22), das auf einer Innenumfangsseite der ersten Platte (12) eingesetzt ist, wobei
die erste Platte (12) eine dem Abgasweg (24) zugewandte Vorderfläche (12a) und eine Rückfläche (12b) auf einer der Vorderfläche (12a) gegenüberliegenden Seite aufweist,
das ringförmige Element (22) eine Vorderfläche (22a), die dem Abgasweg (24) zugewandt ist, und eine Rückfläche (22b) auf einer der Vorderfläche (22a) gegenüberliegenden Seite aufweist,
ein Spalt (26) zwischen der ersten Platte (12) und dem ringförmigen Element (22) vorgesehen ist, wobei sich der Spalt (26) entlang einer Dickenrichtung der ersten Platte (12) erstreckt, und zwar von einem Punkt zwischen einer inneren Umfangskante der Vorderfläche (12a) der ersten Platte (12) und einer äußeren Umfangskante der Vorderfläche (22a) des ringförmigen Elements (22), und
das ringförmige Element (22) einen Pressfittingabschnitt (32) beinhaltet, der an die erste Platte (12) angepresst ist, in einem Abschnitt, der weiter in Richtung einer Seite der Rückseite (22b) des ringförmigen Elements (22) als der Spalt (26) verläuft.

2. Variabler Düsenmechanismus (8) nach Anspruch 1, wobei
die erste Platte (12) eine Innenumfangsfläche aufweist, die mit einem Stufenabschnitt versehen ist, an dem das ringförmige Element (22) in Dickenrichtung der ersten Platte (12) anliegt, und
der Pressfittingabschnitt (32) an der ersten Platte (12) an einem Abschnitt, der weiter in Richtung der Seite der Rückseite (22b) des ringförmigen Elements (22) als der Stufenabschnitt liegt, angepresst ist.

3. Variabler Düsenmechanismus (8) für einen Turbolader (100) mit variabler Kapazität, wobei der variable Düsenmechanismus (8) umfasst:
eine erste Platte (12) mit einer ringförmigen Form;
eine zweite Platte (14), die der ersten Platte (12) zugewandt ist und eine ringförmige Form aufweist, wobei die zweite Platte (14) und die erste Platte (12) einen Abgasweg (24) dazwischen definieren;
eine Vielzahl von Düsenschaufeln (16), die drehbar zwischen der ersten Platte (12) und der zweiten Platte (14) gelagert sind; und
ein ringförmiges Element (22), das auf einer Innenumfangsseite der ersten Platte (12) eingesetzt ist, wobei
die erste Platte (12) eine dem Abgasweg (24) zugewandte Vorderfläche (12a) und eine Rückfläche (12b) auf einer der Vorderfläche (12a) gegenüberliegenden Seite aufweist,
das ringförmige Element (22) eine Vorderfläche (22a), die dem Abgasweg (24) zugewandt ist, und eine Rückfläche (22b) auf einer der Vorderfläche (22a) gegenüberliegenden Seite aufweist,
ein Spalt (26) zwischen der ersten Platte (12) und dem ringförmigen Element (22) vorgesehen ist, wobei sich der Spalt (26) entlang einer Dickenrichtung der ersten Platte (12), zwischen einer inneren Umfangskante der Vorderfläche (12a) der ersten Platte (12) und einer äußeren Umfangskante der Vorderfläche (22a) des ringförmigen Elements (22) erstreckt,
die erste Platte (12) eine Innenumfangsfläche (12c) aufweist, die mit einem Stufenabschnitt (12c1) versehen ist, an dem das ringförmige Element (22) in Dickenrichtung der ersten Platte (12) anliegt, und
der variable Düsenmechanismus (8) ferner ein Presselement (34) beinhaltet, das das ringförmige Element (22) in Richtung des Stufenabschnitts (12c1) presst.

4. Variabler Düsenmechanismus (8) nach Anspruch 3, wobei ein zweiter Spalt (36) zwischen der ersten Platte (12) und dem ringförmigen Element (22) vorgesehen ist, wobei sich der zweite Spalt (36) entlang der Dickenrichtung der ersten Platte (12) zum Stufenabschnitt (12c1) von einem Punkt zwischen der Innenumfangskante der Rückfläche (12b) der ersten Platte (12) und der Außenumfangskante der Rückfläche (22b) des ringförmigen Elements (22) erstreckt.

5. Variabler Düsenmechanismus (8) nach einem der Ansprüche 2 bis 4, wobei der Stufenabschnitt (12c1) vollständig über die Innenumfangsfläche (12c) der ersten Platte (12) ausgebildet ist.

6. Variabler Düsenmechanismus (8) nach einem der Ansprüche 1 bis 5, wobei die erste Platte (12) und das ringförmige Element (22) aus Edelstahl gefertigt sind.

7. Variabler Düsenmechanismus (8) nach einem der Ansprüche 1 bis 6, wobei
die erste Platte (12) eine Düsenhalterung ist, die eine Nabenseitenwand des Abgasweges (24) definiert,
die zweite Platte (14) eine Düsenplatte ist, die eine Mantelseitenwand des Abgasweges (24) definiert, und
die erste Platte (12) mit einer Vielzahl von Haltebohrungen (12h) versehen ist, die jeweils einen Wellenabschnitt (16a) eines entsprechenden der Vielzahl von Düsenschaufeln (16) drehbar tragen.

8. Variabler Düsenmechanismus (8) nach Anspruch 7, wobei ein das Ringelement (22) bildendes Material einen kleineren linearen Ausdehnungskoeffizienten aufweist als ein die erste Platte (12) bildendes Material.

9. Variabler Düsenmechanismus (8) nach Anspruch 8, wobei das ringförmige Element (22) aus einer Nickelbasislegierung und die erste Platte (12) aus Edelstahl gefertigt ist.

10. Variabler Düsenmechanismus (8) für einen Turbolader (100) mit variabler Kapazität, wobei der variable Düsenmechanismus (8) umfasst:
eine erste Platte (12) mit einer ringförmigen Form;
eine zweite Platte (14), die der ersten Platte (12) zugewandt ist und eine ringförmige Form aufweist, wobei die zweite Platte (14) und die erste Platte (12) einen Abgasweg (24) dazwischen definieren;
eine Vielzahl von Düsenschaufeln (16), die drehbar zwischen der ersten Platte (12) und der zweiten Platte (14) gelagert sind; und
ein ringförmiges Element (22), das auf einer Innenumfangsseite der ersten Platte (12) eingesetzt ist, wobei
die erste Platte (12) eine Düsenhalterung ist, die eine Nabenseitenwand des Abgasweges (24) definiert,
die zweite Platte (14) eine Düsenplatte ist, die eine Mantelseitenwand des Abgasweges (24) definiert,
das ringförmige Element (22) eine dem Abgasweg (24) zugewandte Vorderfläche (22a), eine Rückfläche (22b) auf einer der Vorderfläche (22a) gegenüberliegenden Seite und eine äußere Umfangsfläche (22c) aufweist, die nicht mit einem Spalt zwischen der ersten Platte (12) versehen ist,
die erste Platte (12) mit einer Vielzahl von Haltebohrungen (12h) versehen ist, die jeweils einen Wellenabschnitt (16a) eines entsprechenden der Vielzahl von Düsenschaufeln (16) drehbar tragen, und
ein das ringförmige Element (22) bildendes Material einen kleineren linearen Ausdehnungskoeffizienten aufweist als ein die erste Platte (12) bildendes Material.

11. Turbolader (100) mit variabler Kapazität, umfassend:
einen Turbinenrotor (2);
ein Turbinengehäuse (4), das den Turbinenrotor (2) aufnimmt und einen Spiralströmungsweg (10) definiert, in den das Abgas eines Motors strömt; und
den variablen Düsenmechanismus (8) nach einem der Ansprüche 1 bis 10, wobei
das Abgas, das den Spiralströmungsweg (10) passiert hat, dem Turbinenrotor (2) über den variablen Düsenmechanismus (8) zugeführt wird.

## Revendications

1. Un mécanisme à ajutage variable (8) pour un turbocompresseur à capacité variable (100), le mécanisme à ajutage variable (8) comprenant :
une première plaque (12) ayant une forme annulaire ;
une seconde plaque (14) faisant face à la première plaque (12) et possédant une forme annulaire, la seconde plaque (14) et la première plaque (12) définissant entre elles un trajet de gaz d'échappement (24) ;
une pluralité de volets d'ajutage (16) supportés à rotation entre la première plaque (12) et la seconde plaque (14) ; et
un élément annulaire (22) inséré sur un côté de circonférence interne de la première plaque (12),
dans lequel
la première plaque (12) comprend une surface avant (12a) tournée vers le trajet des gaz d'échappement (24) et une surface arrière (12b) sur un côté opposé de celui de la surface avant (12a),
l'élément annulaire (22) comprend une surface avant (22a) tournée vers le trajet des gaz d'échappement (24) et une surface arrière (22b) sur un côté opposé de celui de la surface avant (22a),
un intervalle (26) est prévu entre la première plaque (12) et l'élément annulaire (22), l'intervalle (26) s'étendant, le long d'une direction en épaisseur de la première plaque (12), à partir d'un point situé entre un bord de circonférence interne de la surface avant (12a) de la première plaque (12) et un bord de circonférence externe de la surface avant (22a) de l'élément annulaire (22), et
l'élément annulaire (22) comprend une partie à ajustement serré (32) qui est ajustée serrée sur la première plaque, au niveau d'une partie allant plus loin que l'intervalle (26) en direction d'un côté de la surface arrière (22b) de l'élément annulaire (22).

2. Le mécanisme à ajutage variable (8) selon la revendication 1, dans lequel
la première plaque (12) possède une surface de circonférence interne munie d'une partie en gradin contre laquelle vient en appui l'élément annulaire (22) dans la direction de l'épaisseur de la première plaque (12), et
la partie à ajustement serré (32) est ajustée serrée sur la première plaque (12) au niveau d'une partie allant plus loin que le côté de la surface arrière (22b) de l'élément annulaire (22) que la partie en gradin.

3. Un mécanisme à ajutage variable (8) pour un turbocompresseur à capacité variable (100), le mécanisme à ajutage variable (8) comprenant :
une première plaque (12) ayant une forme annulaire ;
une seconde plaque (14) faisant face à la première plaque (12) et possédant une forme annulaire, la seconde plaque (14) et la première plaque (12) définissant entre elles un trajet de gaz d'échappement (24) ;
une pluralité de volets d'ajutage (16) supportés à rotation entre la première plaque (12) et la seconde plaque (14) ; et
un élément annulaire (22) inséré sur un côté de circonférence interne de la première plaque (12),
dans lequel
la première plaque (12) comprend une surface avant (12a) tournée vers le trajet des gaz d'échappement (24) et une surface arrière (12b) sur un côté opposé de celui de la surface avant (12a),
l'élément annulaire (22) comprend une surface avant (22a) tournée vers le trajet des gaz d'échappement (24) et une surface arrière (22b) sur un côté opposé de celui de la surface avant (22a),
un intervalle (26) est prévu entre la première plaque (12) et l'élément annulaire (22), l'intervalle (26) s'étendant, le long d'une direction en épaisseur de la première plaque (12), à partir d'un point situé entre un bord de circonférence interne de la surface avant (12a) de la première plaque (12) et un bord de circonférence externe de la surface avant (22a) de l'élément annulaire (22),
la première plaque (12) possède une surface de circonférence interne (12c) munie d'une partie en gradin (i2ci) contre laquelle vient en appui l'élément annulaire (22) dans la direction de l'épaisseur de la première plaque (12), et
le mécanisme à ajutage variable (8) comprend en outre un élément d'appui (34) qui appuie l'élément annulaire (22) contre la partie en gradin (12c1).

4. Le mécanisme à ajutage variable (8) selon la revendication 3, dans lequel un second intervalle (36) est prévu entre la première plaque (12) et l'élément annulaire (22), le second intervalle (36) s'étendant le long de la direction de l'épaisseur de la première plaque (12) jusqu'à la partie en gradin (12c1), à partir d'un point situé entre le bord de circonférence interne de la surface arrière (12b) de la première plaque (12) et le bord de circonférence externe de la surface arrière (22b) de l'élément annulaire (22).

5. Le mécanisme à ajutage variable (8) selon l'une des revendications 2 à 4, dans lequel la partie en gradin (i2ci) est formé entièrement au-dessus de la surface de circonférence interne (12c) de la première plaque (12).

6. Le mécanisme à ajutage variable (8) selon l'une des revendications 1 à 5, dans lequel la première plaque (12) et l'élément annulaire (22) sont réalisés en acier inoxydable.

7. Le mécanisme à ajutage variable (8) selon l'une des revendications 1 à 6, dans lequel
la première plaque (12) est une monture d'ajutage définissant une paroi côté moyeu du trajet des gaz d'échappement (24),
la seconde plaque (14) est une plaque d'ajutage définissant une paroi côté carénage du trajet des gaz d'échappement (24), et
la première plaque (12) est pourvue d'une pluralité d'orifices de support (12h) supportant chacun à rotation une partie d'arbre (16a) de l'un des volets correspondants de la pluralité de volets d'ajutage (16).

8. Le mécanisme à ajutage variable (8) selon la revendication 7, dans lequel un matériau formant l'élément annulaire (22) présente un coefficient de dilatation linéaire plus faible qu'un matériau formant la première plaque (12).

9. Le mécanisme à ajutage variable (8) selon la revendication 8, dans lequel l'élément annulaire (22) est réalisé en un alliage à base de nickel et la première plaque (12) est réalisée en acier inoxydable.

10. Un mécanisme à ajutage variable (8) pour un turbocompresseur à capacité variable (100), le mécanisme à ajutage variable (8) comprenant :
une première plaque (12) ayant une forme annulaire ;
une seconde plaque (14) faisant face à la première plaque (12) et possédant une forme annulaire, la seconde plaque (14) et la première plaque (12) définissant entre elles un trajet de gaz d'échappement (24) ;
une pluralité de volets d'ajutage (16) supportés à rotation entre la première plaque (12) et la seconde plaque (14) ; et
un élément annulaire (22) inséré sur un côté de circonférence interne de la première plaque (12),
dans lequel
la première plaque (12) est une monture d'ajutage définissant une paroi côté moyeu du trajet des gaz d'échappement (24),
la seconde plaque (14) est une plaque d'ajutage définissant une paroi côté carénage du trajet des gaz d'échappement (24),
l'élément annulaire (22) comprend une surface avant (22a) tournée vers le trajet des gaz d'échappement (24), une surface arrière (22b) sur un côté opposé à la surface avant (22a), et une surface circonférentielle externe (22c) qui n'est pas pourvue d'un intervalle entre la première plaque,
la première plaque (12) est pourvue d'une pluralité d'orifices de support (12h) supportant chacun à rotation une partie d'arbre (16a) de l'un des volets correspondants de la pluralité de volets d'ajutage (16), et
un matériau formant l'élément annulaire (22) présente un coefficient de dilatation linéaire plus faible qu'un matériau formant la première plaque (12).

11. Un turbocompresseur à capacité variable (100) comprenant :
un rotor de turbine (2) ;
un carter de turbine (4) qui loge le rotor de turbine (2), et définit un trajet d'écoulement en volute (10) dans lequel s'écoulent des gaz d'échappement provenant d'un moteur ; et
le mécanisme à ajutage variable (8) selon l'une des revendications 1 à 10,
dans lequel les gaz d'échappement qui ont traversé le trajet d'écoulement en volute (10) sont délivrés au rotor de turbine (2) via le mécanisme à ajutage variable (8).
